# EUROPEAN PATENT SPECIFICATION

(11) **EP 3 290 273 B1**
(45) Date of publication and mention of the grant of the patent: **17.07.2019**
(21) Application number: 16187362.5
(22) Date of filing: 06.09.2016
(51) Int. Cl.: B60R 9/052, B60R 9/058

(54) **ROOF RACK**
DACHTRÄGER
GALERIE DE TOIT

(43) Date of publication of application: 07.03.2018
(73) Proprietor: Bosal ACPS Holding 2 B.V., 4131 PK Vianen (NL)
(72) Inventor: Neuret, Jean-Pierre, 77600 Bussy Saint Georges (FR); Sargès, Bernard, 77120 Mouroux (FR)
(74) Representative: Hoeger, Stellrecht & Partner Patentanwälte mbB

(56) References cited:
- EP-A1- 1 688 304
- EP-A1- 2 923 892
- EP-A1- 2 942 237
- WO-A1-2014/108161

## Description

The invention relates to a roof rack for motor vehicles comprising, a cross member, leg members arranged on both sides of said cross member, each leg member being provided with a support unit which is designed to rest on a rack mounting section of a body of said motor vehicle with a foot element, and each leg member being further provided with a retaining unit, said retaining unit comprising a straining system and a retaining element, said straining system being connected to said retaining element in order to move said retaining element between a retaining position in which said retaining element cooperates with said rack mounting section on order to fix said leg member to said body and a released position in which said retaining element enables dismounting of the respective leg member from said rack mounting section.

For example WO 2014/108161 A1 discloses such a roof rack. The problem of mounting such a roof rack on a body of a motor vehicle is that the dimension of the body of the motor vehicle can vary and the location of the roof rack mounting section on the body of the vehicle can vary too so that there is a risk that the roof rack will not be properly mounted on the body by the user.

A roof rack according to the preamble of claim 1 is disclosed in EP 2,923,892.

It is the object of the present invention to provide a roof rack which is designed to always allow proper mounting on the body of the vehicle by properly positioning the foot elements with respect to the rack mounting sections of the body.

This object is solved by a roof rack having a connecting unit arranged between the cross member and each support unit which is designed to enable movement of the foot elements with respect to each other in an adjustment direction extending parallel to a longitudinal direction of a carrier bar of the cross member in the course of mounting of said roof rack on said body.

The fact that the support units are not permanently connected to the cross member, in particular the carrier bar of the cross member, enables to adjust the distance between the foot elements in the adjustment direction so as to position the foot elements properly on the rack mounting sections of the body of the vehicle when mounting the roof rack.

Such a connecting unit can be realized in various manners.

For example such a connecting unit could be designed to connect the support unit to the cross member by a joint enabling swiveling movement of the supporting units with respect to the cross member.

In order to provide on one hand a connection which is stable and stiff and which on the other hand a connection allows the movement of the support units with respect to the carrier bar in order to adjust the foot elements in the adjustment direction during mounting of the roof rack.

An advantageous version of the connecting unit provides that the connecting unit is designed to allow a linear movement of the support unit with respect to said carrier bar parallel to the adjustment direction.

The advantage of the linear movement, which takes place parallel to the adjustment direction, is that the roof rack having the support units held in a defined orientation with respect to said carrier bar can be positioned on the respective rack mounting sections of the body without collapsing and more or less close to the final position and due to the degree of freedom in the adjustment direction the support units can be adjusted with respect to each other to obtain a proper positioning of the foot elements on the rack mounting sections of the body in their final position.

There are various manners possible to connect the carrier bar and the support units, for example by bolts.

One advantageous solution provides that the connecting unit comprises a recess arranged within said carrier bar in which a receiving section of said support unit is guided for movement in said adjustment direction.

The advantage of such a design of a connecting unit is that this connecting unit provides a stable and reliable connection between the carrier bar and the support unit which is also easy to adjust in the adjustment direction.

In order to avoid an excessive movement of the support unit in the adjustment direction and in order to also provide a position of the support unit which is always close to the desired position for proper mounting of the roof rack on the rack mounting section of the body an advantageous solution provides the connecting unit with a movement limiting unit, which movement limiting unit comprises a first stop element cooperating within at least one second stop element and that one of said first and said second stop elements is arranged on said support unit and the other of said first and second stop elements is arranged on the carrier bar.

According to this solution the stop elements can be easily adapted to obtain a positioning of the support unit with respect to the carrier bar within an adjustment range defined by the possible variations of the positions of the support units with respect to each other and with respect to the body of the vehicle.

This solution is in particular in of advantage because it can be avoided that the connecting unit is disconnected when trying to mount and to adjust the support unit with respect to the carrier bar.

In general said movement limiting unit can be designed to avoid excessive movement of said support units with respect to each other so that a maximum distance between the support units can be defined.

Another advantageous solution provides that said movement limiting unit comprises two second stop elements arranged at a distance from each other in said adjustment direction and that the first stop element is arranged between said two second stop element with its movement in said adjustment direction being limited by said two second stop elements.

This design of the movement limiting unit has the advantage that for each of the support units a certain range of possible positions with respect to the carrier bar can be defined so that in case of mounting said roof rack on the body of a vehicle the user will find already the support units positioned close to the desired positions for proper fixing the leg members to the body so that in fact only an adjustment over a very limited distance in particular a range of less than 0,05 meters, is necessary.

According to the various solutions explained before there is an adjustment of the support units possible with respect to the carrier bar.

However no details have been given so far whether there is any locking of the relative position of the respective support unit to the carrier bar intended and necessary.

A solution according to the invention giving sufficient stability in use of such a roof rack provides a locking unit which locking unit enables fixing of said adjusted relative position of the respective foot element with respect to said carrier bar.

One particular advantageous solution according to the invention provides that the locking unit enables locking of said carrier bar in any of its positions with respect to the support unit connected thereto.

This means that the locking unit is not a locking unit defining certain fixed positions in which a locking of the carrier bar is possible with respect to this support unit.

This feature defines in particular that within any one of the variety and/or range of a continuous sequence of possible positions of the carrier bar with respect to the support unit the locking unit enables locking in any of these possible positions.

If it is intended to lock the carrier bar in any one of the continuous sequence of possible positions with respect to the support unit one advantageous solution provides that said locking unit enables force locking of said carrier bar with respect to said support unit, in particular force locking of an end portion of said carrier bar with respect to said support unit.

The advantage of a locking unit providing force locking is that force locking is possible in any position within a locking range in which the force locking can take place so that there is no discrete positioning of said support unit with respect to said carrier bar necessary.

Said locking unit can be designed by providing a locking unit which has to be actuated after positioning of said respective support unit with respect to the carrier bar.

However this would make a separate actuation unit for said locking unit necessary and therefore a further source of error would exist.

For that reason an advantageous solution according to the invention provides that said locking unit comprises a clamping element which is connected to said retaining unit and which locks in place a respective portion of said carrier bar in case said retaining unit is in its retaining position and releases said respective portion of said carrier bar in case said retaining unit is in its released position.

One advantageous solution according to the invention of said locking unit provides said locking unit locks in place said portion of said carrier bar by clamping said portion between said clamping element and a rest surface of said support unit.

If in one particular embodiment of said locking unit is designed to lock in place said portion of said carrier bar in case said retaining unit is in its retaining position, it is of advantage if said retaining unit comprises a base member with which said retaining unit is resting on said support unit and guided with respect to said support unit said clamping element is adapted to provide support of a base member of said retaining unit against movement with respect to said support unit towards the respective foot element.

This means that the clamping element is the only support for the base member preventing the base member from moving with respect to said support unit towards said respective foot element, at least a certain length, which is possible for instance due to additional guiding means guiding said base member with respect to said support unit.

With this design it is possible to use a force acting on a base member of said retaining unit towards the respective foot element for generating a clamping force in order to clamp the portion of the carrier bar.

The clamping force is acting on said base member in a direction towards the foot element if the retaining unit is in its retaining position.

Said clamping force is due to a retaining force with which said retaining element is acting on said rack mounting section in order to fix said leg member to said rack mounting section.

The clamping force is obtained as a counteracting force, counteracting the retaining force.

This design enables use of the retaining force in order to generate a clamping force which can be used to actuate the clamping element of the locking unit. When explaining the various embodiments of the present invention no details have been given to the design of the straining system.

One advantageous embodiment according to the invention provides that said straining system comprises a toggle lever system.

Such a toggle lever system has the advantage that it is easy to operate, in particular to operate it manually and that high forces can be obtained for fixing the respective leg member to the body of the vehicle.

One solution which is of said toggle lever system which is of particular advantage comprises a support lever and a push lever and said support lever and said push lever are in an unfolded and extended position in said retaining position of said straining system.

Such a design of the toggle lever system has the advantage that sufficiently high forces for retaining the leg member with respect to the body of the vehicle can be generated by relatively low manual force necessary for transferring the toggle lever system in the unfolded and extending position.

In particular said support lever and said push lever are in an angled position in said released position of said straining system.

For actuating such a toggle lever system a preferred solution provides the push lever with an actuating arm having a handling section so that actuating arm can directly act on the push lever.

In particular the actuating arm is an extension of said push lever extending from said push lever beyond the toggle joint.

In particular in the unfolded and extended position the actuating arm of the push lever is located adjacent the support lever so that in the extended position the toggle lever system needs a minimum of space within the leg member of the inventive roof rack.

Further features and advantages of the present invention are disclosed in the various embodiments of the detailed specification.

In the figures:

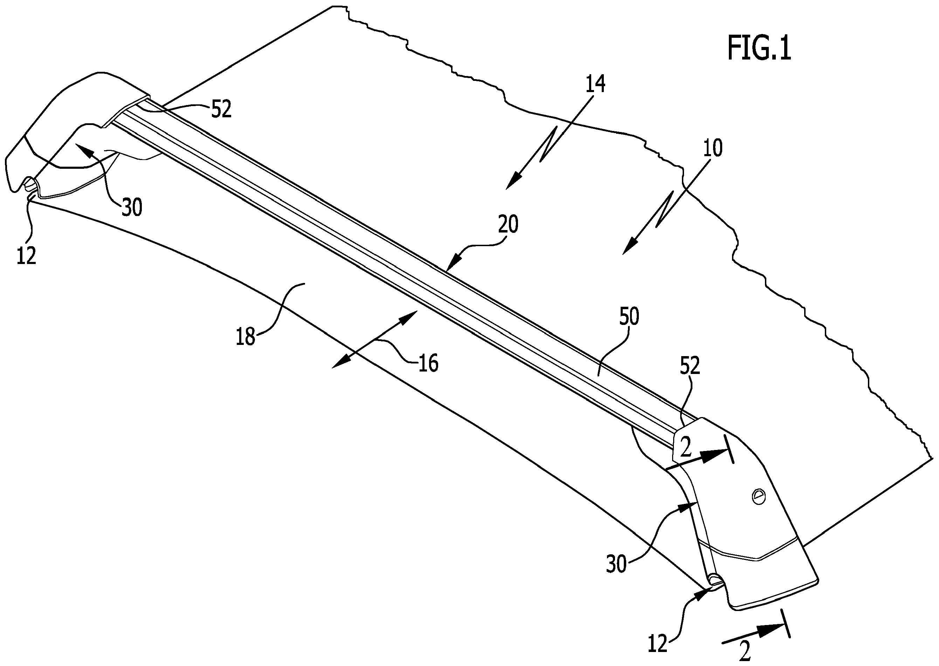

- Fig. 1: shows a perspective view of a first embodiment of a roof rack according to the present invention;
- Fig. 2: shows a sectional view along line 2-2 in fig. 1 with a support unit supporting a carrier bar and a retaining unit in its retaining position;
- Fig. 3: shows a sectional view similar to fig. 2 with the retaining unit in its released position;
- Fig. 4: shows an exploded view of the first embodiment;
- Fig. 5: shows an enlarged exploded view similar to fig. 4 of an end portion of the roof rack as well as a support element with a receiving section receiving the carrier bar;
- Fig. 6: shows a view of the first embodiment in the released position in a direction of arrow A in fig. 2 with the cover removed;
- Fig. 7: shows a sectional view along lines 7-7 in fig. 6;
- Fig. 8: shows a view on the first embodiment in direction of arrow B in fig. 3;
- Fig. 9: shows a sectional view along line 9-9 in fig. 8;
- Fig. 10: shows an enlarged sectional view similar to fig. 2 in the area of an end portion of the carrier bar and a locking unit acting on said end portion;
- Fig. 11: shows a sectional view of a second embodiment of the inventive roof rack similar to fig. 2;
- Fig. 12: shows a sectional view of the second embodiment similar to fig. 3;
- Fig. 13: shows an exploded view of the second embodiment similar to fig. 4;
- Fig. 14: shows a sectional view of the third embodiment similar to fig. 2 and
- Fig. 15: shows a sectional view of the third embodiment similar to fig. 3.

A first embodiment of a roof rack 10 according to the present invention is provided for being mounted on a rack mounting section 12 of a body 14 of a vehicle and comprises a cross member 20 extending transverse to a longitudinal axis 16 of the body 14 with a distance to and above a roof surface 18.

Roof rack 10 comprises leg members 30 arranged on both sides of said cross member 20 which leg members 30 are designed to support cross member 20 on rack mounting section 12 and in addition thereto to fix cross member 20 relative to roof section 12.

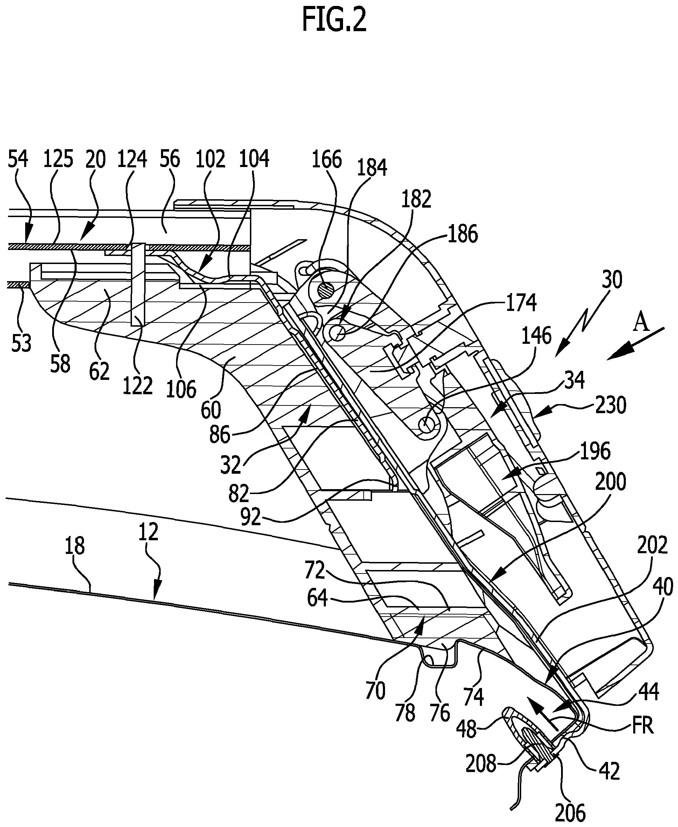

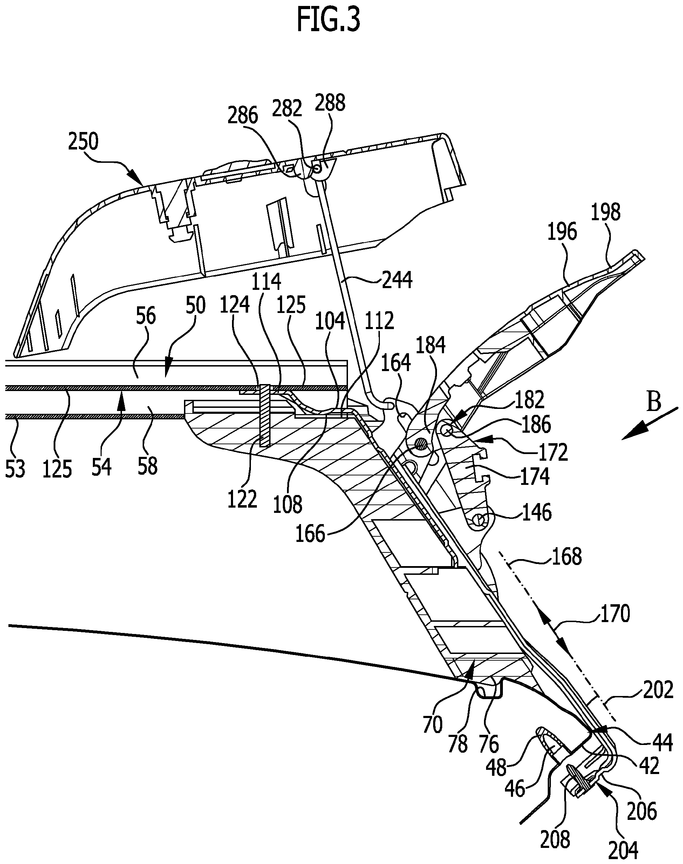

As shown in Fig. 2 to 4 each leg member 30 is provided with a support unit 32, supporting cross member 20 with respect to roof section 12, and a retaining unit 34 which is can be in retaining a retaining position, shown in Fig. 2, in which said cross member 20 is fixed relative to said rack mounting section 12, and a release position, shown in Fig. 3 in which said roof rack 10 together with cross member 20 and leg member 30 can be removed from said rack mounting section 12 or mounted on said rack mounting section 12.

Cross member 20 is connected on both sides to each support unit 32 via connecting units 40 enabling movement of said support units 32 with respect to said cross member 20 in an adjustment direction 38 extending parallel to a longitudinal extension on said rack of cross member 20.

In particular roof rack 10 with its leg members 30 is supported by mounting sections 12 provided on said body 14, in particular provided on said body 14 on outer sides of said roof surface 18, and on a border structure 44 surrounding a door opening in said body 14.

Said border structure 44 for receiving said first embodiment is provided with a mounting surface 42 extending on a side of said roof section 12 which is arranged opposite to roof surface 18 and from said mounting surface 42 a mounting recess 46 is extending into the interior space of border structure 44, which mounting recess 46 is preferably a bore in a receiving body 48 arranged in the interior of said border structure 44.

In particular mounting section 12 is provided on an upper portion of the door opening.

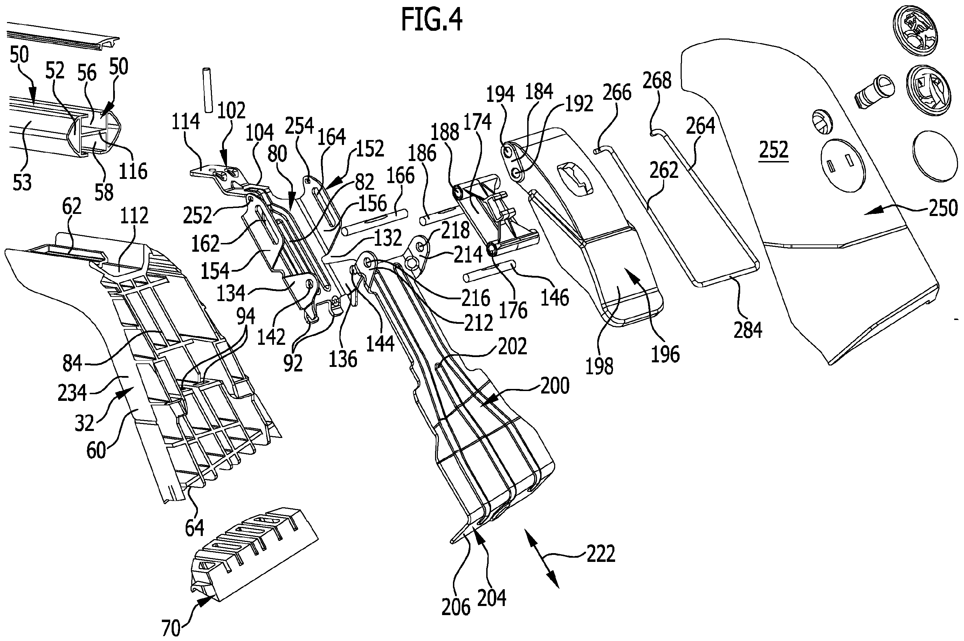

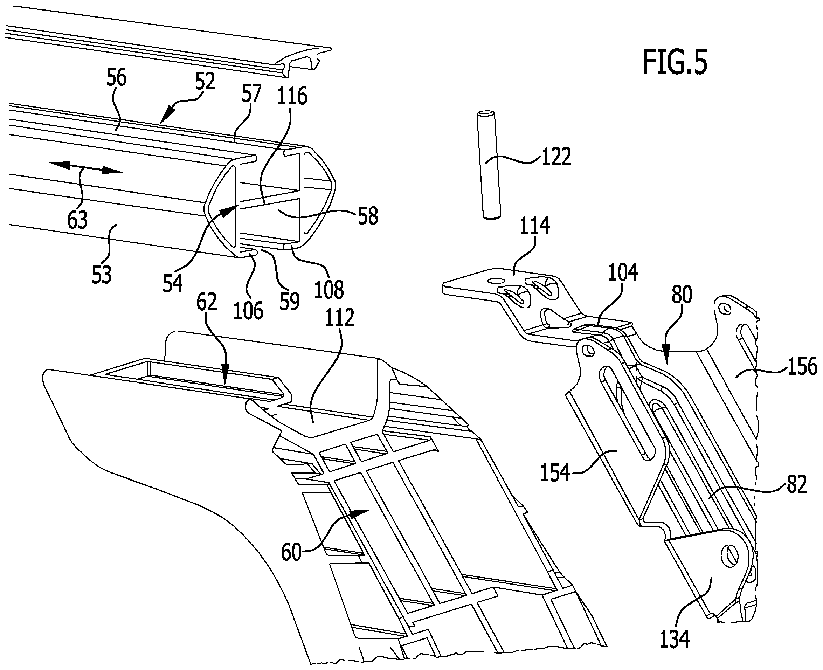

As shown in particular in Fig. 4 and 5 cross member 20 comprises a carrier bar 50 provided with end portions 52, connected to support units 32 of leg members 30 by connecting units 40.

Carrier bar 50 is provided with an internal stiffening structure 54 forming an upper recess 56 accessible from an upper opening 57 arranged on an upper side of said carrier bar 50, which upper side is arranged opposite to said roof section 18, and a lower recess 58 accessible from lower opening 59 arranged on a lower side of said carrier bar 50 and this lower side is facing roof section 18.

In particular end portions 52 of cross member 20 are received and supported by support units 32, in particular a receiving section 62 of a support element 60 of said support unit 32. In order to allow receiving section 62 to move with respect to carrier bar 50 in adjustment direction 38 parallel to the longitudinal direction of carrier bar 50 receiving section 62 extends into lower recess 58 and is guided by carrier bar 50 by abutting on walls of lower recess 58 formed by outer structure 53 and internal stiffening structure 54 of carrier bar 50.

Support element 60 further comprises a base section 64 and connects said receiving section 62 to said base section 64.

Base section 64 is supported by a foot element 70 of support unit 32 which is made of elastic material and comprises a rest surface 72 on which base section 64 is resting and to which base section 64 is fixed. Further foot element 70 comprises a support surface 74 with which foot element 70 is sitting on rack mounting section 12, in particular on outer areas of roof surface 18 formed by border structure 44 of body 14, forming the rack mounting section 12 for the first embodiment.

Further foot element 70 comprises in particular a protrusion 76 directed towards a recess 78 arranged on roof section 12 into which it extends in case roof rack 10 is mounted on body 14.

Retaining unit 34 comprises a base member 80 supported by support unit 32, in particular supported by support element 60 thereof, which base member 80 is provided with a bottom portion 82 abutting on internal structure elements 84 of support element 60 with its bottom surface 86 and further bottom portion 82 has guide extensions 92 extending into receptacles 94 arranged on support element 60 which receptacles 94 guide bottom portion 82 at a certain defined distance from base section 64 of support element 60 in abutment on support element 60 but moveable with respect to support element 60 over at least a certain distance.

Base member 80 further is provided with a support extension 102 extending from bottom portion 82 on its side opposite to guide extensions 92 towards the respective end portion 52 of carrier bar 50 which is received by receiving section 62 of support element 60.

In particular support extension 102 comprises a clamping element 104 which extends into lower recess 58 of the respective end portion 52 of carrier bar 50 and abuts on lateral flange portions 106, 108 formed by outer structure 53 of carrier bar 50 and which extend on both sides of lower opening 59 and limit lower opening 59.

Flange portions 106, 108 rest on a rest surface 112 provided by support element 60 adjacent receiving section 62 and extending transverse to bottom portion 82 when supported by internal structure elements 84 on bottom surface 86.

According to such a design flange portions 106, 108 at end portions 52 of carrier bar 50 are arranged between clamping element 104 and rest surface 112 of support element 60 which together form a locking unit 100, adapted to clamp flange portions 106, 108 in a force locking manner as described later in detail.

Further arm member 102 is provided with tongue 114 extending away from clamping element 104 on a side of clamping section 104 opposite to bottom portion 82 of base member 80 (fig. 5).

Tongue 114 is fixed with respect to receiving section 62 by a pin 122 extending into and being fixed in place by receiving section 62 of support element 60.

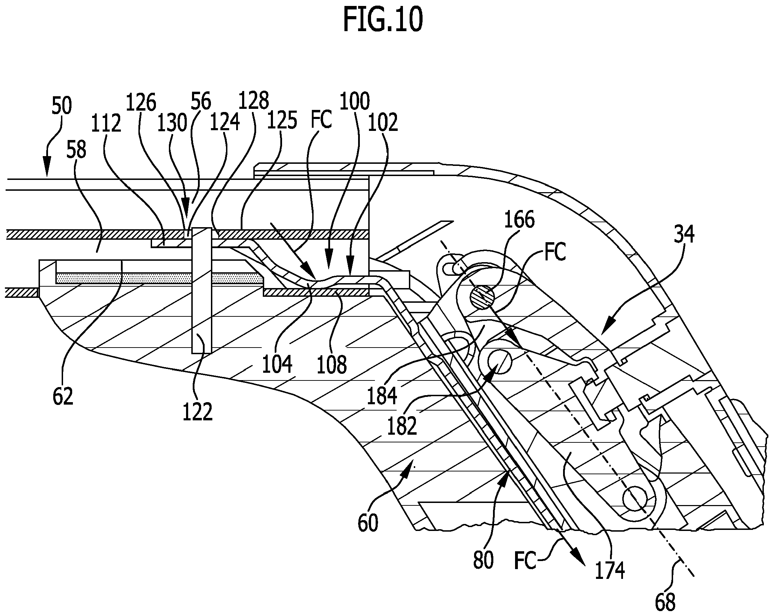

Pin 122 further extends through an opening 124 in a central stiffening web 125 of stiffening structure 54, which opening 124 provides two stop surfaces 126, 128 arranged at a distance from each other in adjustment direction 38 in order to allow a limited relative movement between carrier bar 50 and to pin 122 and consequently support element 60 and tongue 114 (fig 10).

Therefore pin 122 with opening 124 and its stop surfaces 126, 128 forms a movement limiting unit 130 for the relative movement between carrier bar 50 and pin 122 (fig. 10) and therefore the relative movement between carrier bar 50 and support unit 32.

Further base member 80 is provided with a first pair 132 of side flanges 134 and 136 which side flanges 134 and 136 extend on opposite sides of bottom portion 82 away from bottom portion 82 and transverse to bottom portion 82 and which side flanges 134 and 136 are provided with bearing openings 142 and 144 adapted to receive a bearing pin 146.

Base member 80 is provided with a second pair 152 of side flanges 154 and 156 arranged on opposite sides of bottom portion 82, extending parallel to side flanges 134 and 136 of the first pair 132 of side flanges and being provided with longitudinal guide openings 162 and 164 for guiding a sliding pin 166 extending through guide openings 162 and 164 for movement parallel to a longitudinal direction of guiding openings 162 and 164.

Preferably guide openings 162 and 164 extend parallel to a geometric plane of extension 168 intersecting bearing pin 146 and sliding pin 166 and defining the orientation of a direction of extension 170 of a toggle lever system 172 connecting bearing pin 146 and sliding pin 166 both being arranged in plane of extension 168 with sliding pin 166 being moveable in plane of extension 168.

Toggle lever system 172 comprises a support lever 174 articulately connected to bearing pin 146, for example by receiving bearing pin 146 in a receiving bore 176, and connected to a toggle joint 182 formed between support lever 174 and a push lever 184, for example by a pin 186 articulately connected to support lever 174 at its side opposite to bearing pin 146. Pin 186 is for example received in a receiving bore 188 of support lever 174.

Further pin 186 is connected to push lever 184 by extending through bearing openings 192 arranged at one end of push lever 184.

An opposite end of push lever 184 is provided with bearing openings 194 receiving sliding pin 166 and being arranged between side flanges 154, 156.

Push lever 184 is further provided with an actuating arm 196 which starting from push lever 184 extends beyond bearing openings 192 in a direction opposite to the extension of push lever 184 and which is provided with a handling section 198 which enables manually actuated swiveling of handling arm 196 about an axis provided by sliding pin 166.

Sliding pin 166 is further connected to a retaining member 200 comprising a base portion 202 extending between sliding pin 166 and a fixation portion 204. Fixation portion 204 comprises for example a flange 206 extending transverse to base portion 202 as well as a finger 208 extending from flange 206 towards mounting surface 42 and being adapted to enter into a mounting recess 46 provided in border structure 44 so that fixation portion 204 in its retaining position abuts on mounting surface 42 with flange 206 and further extends with finger 208 into mounting recess 46.

Base portion 202 of retaining element 200 is further provided with two bearing flanges 212 and 214 extending transverse to base portion 202 and being provided with bearing openings 216 and 218 through which sliding pin 166 is extending, so that retaining element 200 is movable in a direction 222 extending parallel to direction of extension 170 in order to move fixation portion 204 of retaining element 200 with respect to border structure 44 so as to move fixation portion 204 in its retaining position, in which flange 206 abuts on mounting surface 42 and finger 208 extends into mounting recess 46, or its a release position, in which flange 206 is positioned in such a distance from mounting surface 42 that finger 208 does not anymore extend into mounting recess 46 and therefore finger 208 will not reach mounting surface 42 so that retaining element 200 in its release position will enable removal of leg member 30 from body 14.

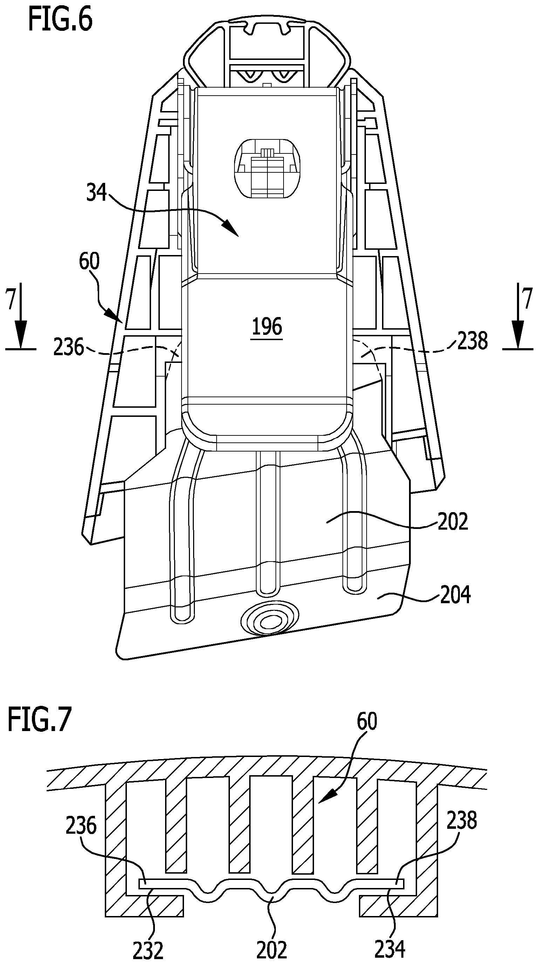

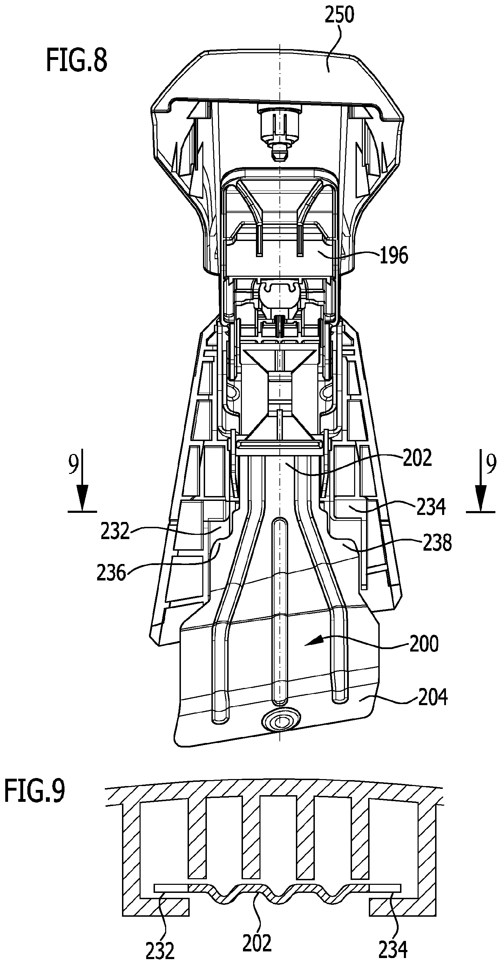

In order to fix base portion 202 of retaining element 200 with respect to support element 60 in the retaining position of retaining element 200, support element 60 is provided with recesses 232, 234 receiving locking and guiding sections 236, 238 of base portion 202 in the retaining position of retaining element 200 (fig. 6 and fig. 7), whereas locking and guiding sections 236, 238 leave recesses 232, 234 when moving retaining element 200 with its base portion 202 into release position (fig. 8, fig. 9) in which retaining element 200 can swivel about the axis of sliding pin 166 and in particular enable fixation portion 204 to move transverse to the extension of border structure 44 from a mounting position, in which flange 206 and finger 208 face mounting surface 42 and mounting recess 46, into a dismounting position, in which fixation portion 204 is free from contacting roof section 12 and border structure 44 so that leg members 30 of roof rack 10 can be easily removed from body 44.

Movement of fixation portion 204 is obtained by movement of sliding pin 166 in extension plane 168 of toggle lever system 172 which is achieved movement of support lever 174 and push lever 184 between an extended position (as shown in fig. 2), and an angled position (shown in fig. 3) in order to move sliding pin 166 in guide openings 162, 164 in direction of extension 170 such that sliding pin 166 moves retaining element 200 and therefore fixation portion 204 between the retaining position and the release position.

In the extended position of support lever 174 and push lever 184 sliding pin 166 is arranged within guide openings 162, 164 at the maximum distance from bearing pin 146 and toggle joint 182 is arranged between extension plane 168 intersecting pins 146 and 166 and base portion 202 or bottom portion 82 of base portion 80, and in this position toggle joint 182 is stabilized by abutting on base portion 202.

In the angled position of toggle lever system 172, support lever 174 and push lever 184 are angled with respect to each other about toggle joint 182 and in this angled position of support lever 174 and push lever 184, toggle joint 182 is arranged on a side of extension plane 168 opposite to base portion 202 so that for example support lever 174 and push lever 184 extend transverse to each other which has the consequence the sliding pin 166 is in a position closest to bearing pin 146.

In this angled position of support lever 174 and push lever 184 retaining element 200 is held in its release position in which - as described before - flange 206 is positioned at a distance from mounting surface 42 and finger 208 extends at a distance from mounting surface 42 and does not extend into mounting recess 46 of border structure 44 (fig. 3).

In the extended position of toggle lever system 172 and therefore in the retaining position of fixation portion 204 a retaining force FR with which fixation portion 204 acts against border structure 44, in particular mounting surface 42, has to be supported by a counteracting force acting on sliding pin 166 and backed up by bearing pin 146 so that finally base member 80 receives said counteracting force and is subject to said counteracting force FC.

Base member 80 when subject to counteracting force FC is designed to be supported via clamping element 104 on support element 60 against movement in direction of foot element 70, which has the consequence that clamping element 104 is acting on lateral flange portions 106, 108 of carrier bar 50 and pressing them against rest surface 112 and therefore fixes lateral flange portions 106, 108 of carrier bar 50 in a force locking manner between clamping element 104 and rest surface 112, to thereby fix carrier bar 50 with respect to the respective support unit 32 against any movement in adjustment direction 38 in a force locking manner, so that in fact counteracting force FC is used as a clamping force FC in locking unit 100 with which clamping element 104 acts on flange portions 106, 108.

If however toggle lever system 172 is transferred from its extended position into its angled position fixation portion 204 will move towards its release position and not any more act against border structure 44 with retaining force FR and therefore clamping force FC in locking unit 100 will disappear and clamping element 104 will not anymore press lateral flange portions 106, 108 against rest surface 112 and release the force locking fixation of carrier bar 50 with respect to the respective support unit 32, so that movement of carrier bar 50 with respect to support structure 32 is possible over a certain path as allowed by limiting unit 130 as long as toggle lever system 172 remains in its angled position.

This limited movement of carrier bar 50 enables adaption of the distance between the two support structures 32 to the respective roof section 18 of body 14 in case of mounting of roof rack 10 a body 14.

In the extended position of support lever 174 and push lever 184 handling arm 196 extends in a position close to base portion 202 of retaining element 200 and can be covered by a cover 250 which fully covers retaining unit 34 and with its outer walls 252 is arranged to adjoin outer walls 254 of support unit 32 so that in its closed position cover 250 with its outer wall 252 and support unit 32 with its outer wall 254 primarily define the overall appearance of each leg member 30.

This position of cover 250 is the covering position and cover 250, as shown in figs. 2 and 3, can be moved from its covering position (fig. 2) to an uncovering position in which cover 250 is positioned above carrier bar 50 (fig. 3).

In order to properly define the movement of cover 250 from its covering position to its uncovering position and also in order to define the uncovering position of cover 250, cover 250 is articulatedly connected to guide arms 262, 264 which by themselves are articulately connected to the second pair of side flanges 174, 175 for example by end portions 266, 268 of guide arms 262, 244 extending through bearing openings 272, 276 arranged on end portions of side flanges 174, 176 which are arranged opposite to side flanges 154, 156 of the first pair 152.

Further guide arms 262, 264 are articulately connected to cover 250 by a hinge unit 282 which for example is formed by a connecting arm 284 connecting guide arms 262, 264 at its ends opposite to end portions 266, 268. Connecting arm 284 is rotatably received between protrusions 286, 288 arranged on a side of cover 250 facing retaining unit 34.

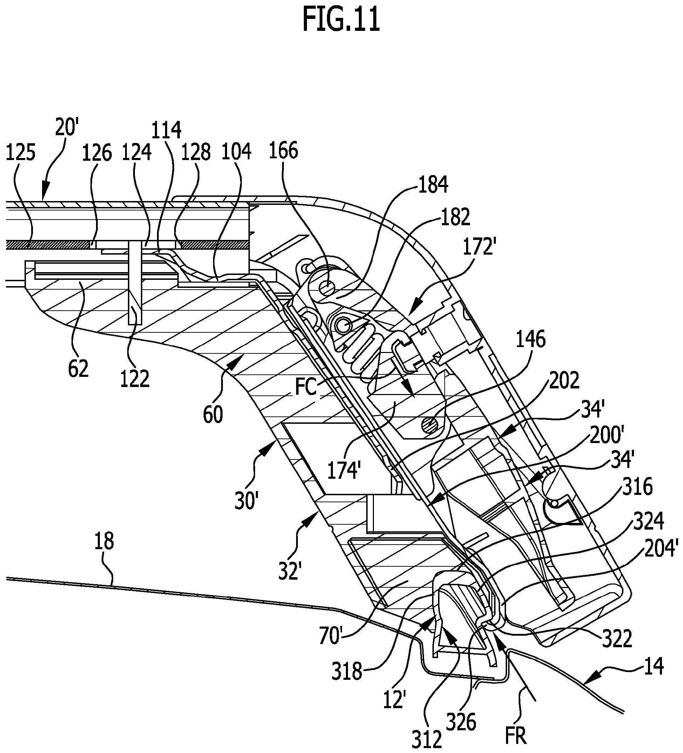

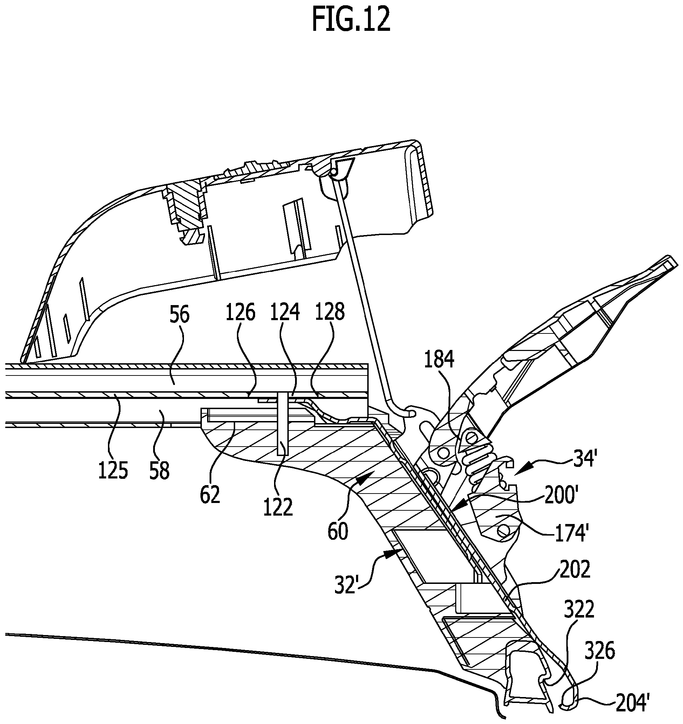

In a second embodiment, as shown in fig. 11 and fig. 12 all the elements which are identical with a first embodiment are provided with the same reference numerals so that with respect to the description of these elements reference can be made to the explanations in connection with the first embodiment.

Contrary to the first embodiment leg members 30' are designed to support cross member 20' on a rack mounting section 12' which is not formed by the outer side of roof surface 12 and border structure 44 but by a roof railing 312 usually arranged to extend above roof surface 18 and supported by roof surface 18 or by body 14 of the vehicle itself.

According to the second embodiment foot element 70' is designed to be supported on an upper side 316 of roof railing 312 and on an inner side 318 of roof railing 312, which is facing roof railing 312 on the opposite side of body 14.

Further retaining element 200' is provided with a fixation portion 204' adapted to grip into a notch 322 arranged on an outer side 324 of roof railing 312 with a gripping edge 326 formed by fixation portion 204'.

Further fixation portion 204' is adapted to extend over outer side 324 of roof railing 312 towards base member 80.

In particular, according to the second embodiment base portion 202 as well as bearing flanges 212 and 214 with bearing openings 216 and 218 connected to sliding pin 166 are identical with a first embodiment.

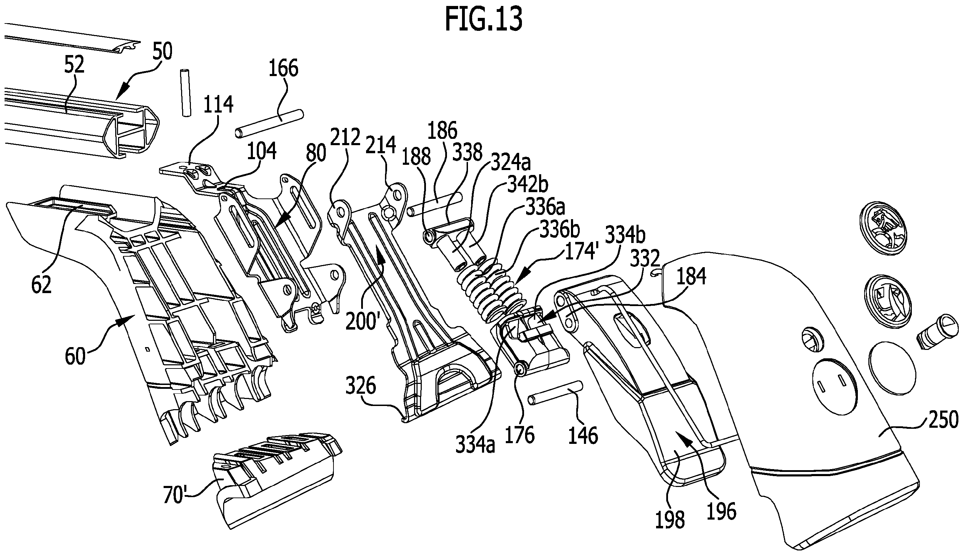

Toggle lever system 172' comprises a support lever 174' which is different from the support lever 174 of the first embodiment due to the fact that as shown in fig. 13 support lever 174' is not a single part comprising receiving bores 176 and 188 but rather comprises a socket portion 332 comprising receiving bore 176 and guide portions 334a and 334b receiving spring elements 336a and 336b and an end portion 338 comprising receiving bore 188 and being supported by spring elements 336a and 336b.

Preferably end portion 338 is provided with guide elements 342a, 342b which extend into spring elements 336a, 336b and into guide portions 334a, 334b of socket portion 332 such that end portion 338 is guided with respect to socket portion 332 and in addition supported by spring elements 336a, 336b with respect to socket portion 332, so that end portion 338 can be moved with respect to socket portion 332 by compressing spring elements 336a, 336b.

Further end portion 338 is guided with respect to socket portion 332 in a direction of the longitudinal extension of support lever 174' which direction is intersecting receiving bores 176 and 188.

In effect spring elements 336a, 336b provide for a certain kind of elasticity related to the distance between receiving bore 176 and receiving bore 188. According to such a design of support lever 174' the distance between support pin 146 and sliding pin 166 in the retaining position can vary depending on the retaining force FR with which gripping edge 326 is acting against notch 322 in roof railing 312.

In summary toggle lever system 172' according to the second embodiment is provided with a defined elasticity in direction of its longitudinal extension and in particular in its retaining position, due to spring elements 336a, 336b which are able to compensate for any dimensional variations of roof railing 312 or the design of retaining unit 34'.

In particular in the second embodiment limiting unit 130 has the same basic design as limiting unit 130 of the first embodiment and further locking unit 100 also has the same design and function as locking unit 100 disclosed in connection with a first embodiment.

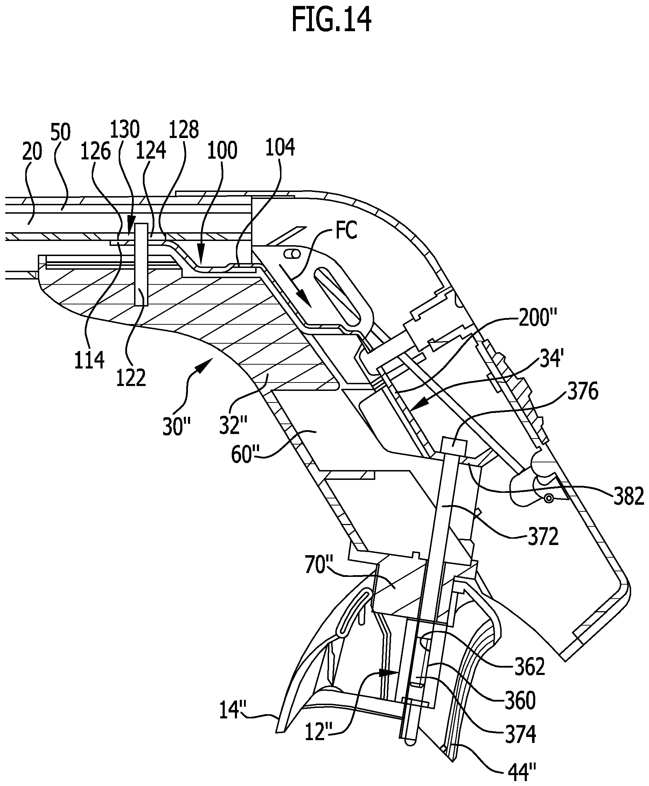

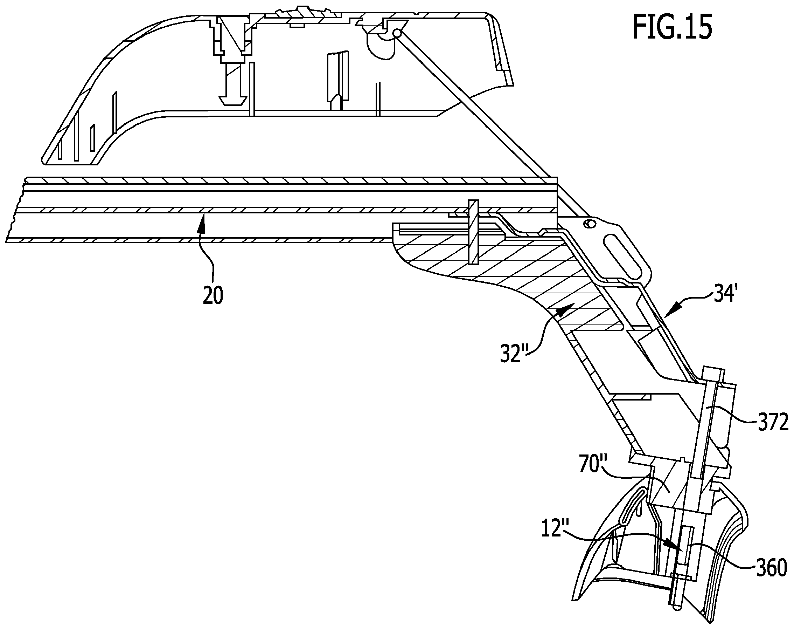

In a third embodiment as shown in figs. 14 and 15 roof rack 10 is provided with a cross member 20 which is identical with all cross members of the embodiments described before.

In the third embodiment support unit 32 with its support element 60" is designed for mounting the roof rack on a specific fixture 360 arranged for example in a border structure 44" of the respective body 14" of the motor vehicle.

For example fixture 360 comprises a threaded bore 332 extending more or less in a vertical direction (e.g. with a maximum deviation of 30° to the vertical direction) and transverse to roof surface 18 and its threaded bore 362 is accessible from above, which means from the upper side of body 14.

For example fixture 360 also provides a support for foot element 70" so that fixture 360 also represents a rack mounting section 12" of body 14" of the vehicle.

In this case leg member 30" can be fixed by a simple threaded bolt 372 with its threaded end 374 extending into threaded bore 362 and with its head 376 abutting on a pulling section 382 of a retaining member 200" which is directly connected to clamping element 104 and tongue 114 having the same function as disclosed in connection with the first embodiment.

When driving threaded bolt 172 into threaded bore 362 head 376 of threaded bolt acts on pulling section 382 of retaining member 200' pulling retaining member 200' with a retaining force in direction of foot element 70" so that retaining member 200' directly acts on clamping element 104 of locking unit 100 with clamping force FC.

In addition limiting unit 130 is designed in the same way as described in connection with the first embodiment.

In particular all elements of the third embodiment which are identical with the second or first embodiment are provided with the same reference numerals so that with respect to the description thereof reference can be made to the description of the first and second embodiment.

## Claims

1. Roof rack (10) for motor vehicles comprising,
a cross member (20), leg members (30) arranged on both sides of said cross member (20), each leg member (30) being provided with a support unit (32) which is designed to rest on a rack mounting section (12) of a body (14) of said motor vehicle with a foot element (70), and each leg member (30) being further provided with a retaining unit (34), said retaining unit (34) comprising a straining system (172), and a retaining element (200), said straining system (172) being connected to said retaining element (200) in order to move said retaining element (200) between a retaining position, in which said retaining element (200) cooperates with said rack mounting section (12) in order to fix said leg member (30) to said body (14), and a release position, in which said retaining element (200) enables dismounting of the respective leg member (30) from said rack mounting section (12),
**characterized in that** a connecting unit (40) arranged between the cross member (20) and each support unit (32) is designed to enable movement of the foot elements (70) with respect to each other in an adjustment direction (38) extending parallel to a longitudinal direction a carrier bar (50) of the cross member (20) in the course of mounting of said roof rack (12) on said body (14), that a locking unit (100) is provided, said locking unit (100) enabling fixing of said relative position of the respective foot element (70) with respect to said carrier bar (50), that said locking unit (100) comprises a clamping element (104) which is connected to said retaining unit (34) and which locks in place a respective portion (52) of said carrier bar (50) in case said retaining unit (34) is in its retaining position, and releases said respective portion (52) in case said retaining unit (34) is in its released position, that said locking unit (100) locks in place said portion (52) of said carrier bar (50) by clamping said portion (52) between said clamping element (104) and a rest surface (112) of said support unit (32), and that in said retaining position of said retaining unit (34) a clamping force (FC) is acting on said base member (80) in a direction towards the foot element (70), and that said clamping force (FC) is due to a retaining force (FR) with which said retaining element (200) is acting on said rack mounting section (12).

2. Roof rack according to claim 1, **characterized in that** the connecting unit (40) is designed to allow a linear movement of the support unit (32) with respect to said carrier bar (50) parallel to the adjustment direction (38).

3. Roof rack according to claim 1 or 2, **characterized in that** the connecting unit (40) comprises a recess (58) arranged within said carrier bar (50) in which a receiving section (62) of said support unit (32) is guided for movement in said adjustment direction (38).

4. Roof rack according to one of the preceding claims, **characterized in that** the connecting unit (40) is provided with a movement limiting unit (130), and that said movement limiting unit (130) comprises a first stop element (122) cooperating with at least one second stop element (126, 128) and that one of said first and second stop elements (122, 126, 128) is arranged on said support unit (32) and another of said first and second stop elements (126, 128, 122) is arranged on the carrier bar (50).

5. Roof rack according to one of the preceding claims, **characterized in that** said movement limiting unit (130) comprises two second stop elements (126, 128), arranged at a distance from each other in said adjustment direction (38) and the first stop element (122) is arranged between said two second stop elements (126, 128) with its movement in said adjustment direction (38) being limited by said two second stop elements (126, 128).

6. Roof rack according to one of the preceding claims, wherein said locking unit (100) enables locking a portion (52) of said carrier bar (50) in any of its positions with respect to the support unit (32) connected thereto.

7. Roof rack according to one of the preceding claims, wherein said locking unit (100) enables force locking of a portion (52) of said carrier bar (50) with respect to said support unit (32).

8. Roof rack according to one of the preceding claims, **characterized in that** said retaining unit (34) comprises a base member (80) with which said retaining unit (34) is resting on said support unit (32) and guided with respect to said support unit (32) and **in that** said clamping element (104) is adapted to provide support of said base member (80) of said retaining unit (34) against movement with respect to said support unit (32) towards the respective foot element (70).

9. Roof rack according to one of the preceding claims, wherein said straining system (172) comprises a toggle lever system (172).

10. Roof rack according to claim 9, **characterized in that** said toggle lever system (172) comprises a support lever (174) and a push lever (184) and that said support lever (174) and said push lever (184) are in an unfolded and extended position in said retaining position of said straining system (172).

11. Roof rack according to claim 9 or 10, **characterized in that** said support lever (174) and said push lever (184) are in an angled position in said release position of said straining system (172).

12. Roof rack according to one of claims 9 to 11 **characterized in that** push lever (184) is provided with an actuating arm (196) having a handling section (198).

## Patentansprüche

1. Dachträger (10) für Motorfahrzeuge mit
einem Querelement (20), Beinelementen (30), die auf beiden Seiten des Querelements (20) angeordnet sind, wobei jedes Beinelement (30) mit einer Trageinheit (32) versehen ist, die so ausgelegt ist, dass sie mit einem Fußelement (70) auf einem Ständermontageabschnitt (12) einer Karosserie (14) des Motorfahrzeugs aufliegt, und wobei jedes Beinelement (30) weiterhin mit einer Halteeinheit (34) versehen ist, wobei die Halteeinheit (34) ein Spannsystem (172), und ein Halteelement (200) aufweist, wobei das Spannsystem (172) mit dem Halteelement (200) verbunden ist, um das Halteelement (200) zwischen einer Haltestellung, in welcher das Halteelement (200) mit dem Ständermontageabschnitt (12) zusammenwirkt, um das Beinelement (30) an der Karosserie (14) zu befestigen, und einer Freigabestellung, in welcher das Halteelement (200) das Abmontieren des entsprechenden Beinelements (30) von dem Ständermontageabschnitt (12) ermöglicht, zu bewegen,
**dadurch gekennzeichnet, dass** eine zwischen dem Querelement (20) und jeder Trageinheit (32) angeordnete Verbindungseinheit (40) dafür ausgelegt ist, die Bewegung der Fußelemente (70) in Bezug zueinander in einer Einstellrichtung (38), die sich parallel zu einer Längsrichtung einer Tragstange (50) des Querelements (20) erstreckt, im Zuge des Befestigens des Dachständers (12) an der Karosserie (14) zu ermöglichen, dass eine Feststelleinheit (100) vorgesehen ist, wobei die Feststelleinheit (100) das Festlegen der relativen Stellung des entsprechenden Fußelements (70) in Bezug auf die Tragstange (50) ermöglicht, dass die Feststelleinheit (100) ein Klemmelement (104) aufweist, welches mit der Halteeinheit (34) verbunden ist und welches einen entsprechenden Abschnitt (52) der Tragstange (50) arretiert, wenn sich die Halteeinheit (34) in ihrer Haltestellung befindet, und den entsprechenden Abschnitt (52) freigibt, wenn sich die Halteeinheit (34) in ihrer Freigabestellung befindet, dass die Feststelleinheit (100) den Abschnitt (52) der Tragstange (50) arretiert, indem sie den Abschnitt (52) zwischen dem Klemmelement (104) und einer Auflagefläche (112) der Trageinheit (32) festklemmt, und dass in der Haltestellung der Halteeinheit (34) eine Klemmkraft (FC) auf das Basisglied (80) in einer Richtung auf das Fußelement (70) zu wirkt, und dass die Klemmkraft (FC) auf eine Haltekraft (FR) zurückgeht, mit der das Halteelement (200) auf den Ständermontageabschnitt (12) einwirkt.

2. Dachträger nach Anspruch 1, **dadurch gekennzeichnet, dass** die Verbindungseinheit (40) so ausgelegt ist, dass sie eine lineare Bewegung der Trageinheit (32) in Bezug auf die Tragstange (50) parallel zu der Einstellrichtung (38) erlaubt.

3. Dachträger nach Anspruch 1 oder 2, **dadurch gekennzeichnet, dass** die Verbindungseinheit (40) eine in der Tragstange (50) angeordnete Ausnehmung (58) aufweist, in der ein Aufnahmeabschnitt (62) der Trageinheit (32) zur Bewegung in der Einstellrichtung (38) geführt wird.

4. Dachträger nach einem der vorhergehenden Ansprüche, **dadurch gekennzeichnet, dass** die Verbindungseinheit (40) mit einer Bewegungsbegrenzungs-Einheit (130) ausgestattet ist, und dass die Bewegungsbegrenzungs-Einheit (130) ein erstes Anschlagelement (122) aufweist, welches mit wenigstens einem zweiten Anschlagelement (126, 128) zusammenwirkt, und dass eines der ersten und zweiten Anschlagelemente (122, 126, 128) auf der Trageinheit (32) angeordnet ist und ein anderes der ersten und zweiten Anschlagelemente (126, 128, 122) auf der Tragstange (50) angeordnet ist.

5. Dachträger nach einem der vorhergehenden Ansprüche, **dadurch gekennzeichnet, dass** die Bewegungsbegrenzungs-Einheit (130) zwei zweite Anschlagelemente (126, 128) aufweist, die in der Einstellrichtung (38) in einem Abstand zueinander angeordnet sind, und das erste Anschlagelement (122) zwischen den zwei zweiten Anschlagelementen (126, 128) angeordnet ist, wobei seine Bewegung in der Einstellrichtung (38) durch die zwei zweiten Anschlagelemente (126, 128) begrenzt ist.

6. Dachträger nach einem der vorhergehenden Ansprüche, bei dem die Feststelleinheit (100) das Feststellen eines Abschnitts (52) der Tragstange (50) in jeder ihrer Stellungen in Bezug auf die mit ihr verbundene Trageinheit (32) ermöglicht.

7. Dachträger nach einem der vorhergehenden Ansprüche, bei dem die Feststelleinheit (100) einen Kraftschluss eines Abschnitts (52) der Tragstange (50) mit Bezug auf die Trageinheit (32) ermöglicht.

8. Dachträger nach einem der vorhergehenden Ansprüche, **dadurch gekennzeichnet, dass** die Halteeinheit (34) ein Basisglied (80) aufweist, mit dem die Halteeinheit (34) auf der Trageinheit (32) aufliegt und mit Bezug auf die Trageinheit (32) geführt wird, und dass das Klemmelement (104) dafür angepasst ist, das Basisglied (80) der Halteeinheit (34) gegen eine Bewegung in Bezug auf die Trageinheit (32) in Richtung auf das entsprechende Fußelement (70) zu unterstützen.

9. Dachträger nach einem der vorhergehenden Ansprüche, bei dem das Spannsystem (172) ein Kniehebelsystem (172) aufweist.

10. Dachträger nach Anspruch 9, **dadurch gekennzeichnet, dass** das Kniehebelsystem (172) einen Stützhebel (174) und einen Schubhebel (184) aufweist, und dass sich der Stützhebel (174) und der Schubhebel (184) in der Haltestellung des Spannsystems (172) in einer ausgeklappten und gestreckten Stellung befinden.

11. Dachträger nach Anspruch 9 oder 10, **dadurch gekennzeichnet, dass** sich der Stützhebel (174) und der Schubhebel (184) in der Freigabestellung des Spannsystems (172) in einer abgewinkelten Stellung befinden.

12. Dachträger nach einem der Ansprüche 9 bis 11, **dadurch gekennzeichnet**, das der Schubhebel (184) mit einem Betätigungsarm (196), der einen Handhabungsabschnitt (198) aufweist, versehen ist.

## Revendications

1. Galerie de toit (10) pour véhicules motorisés comprenant,
un élément transversal (20), des éléments de jambe (30) disposés des deux côtés dudit élément transversal (20), chaque élément de jambe (30) étant pourvu d'une unité de support (32) qui est conçue pour reposer sur une section de montage de galerie (12) d'une carrosserie (14) dudit véhicule motorisé avec un élément de pied (70), et chaque élément de jambe (30) étant en outre pourvu d'une unité de retenue (34), ladite unité de retenue (34) comprenant un système de contrainte (172), et un élément de retenue (200), ledit système de contrainte (172) étant relié au dit élément de retenue (200) afin de déplacer ledit élément de retenue (200) entre une position de retenue, dans laquelle ledit élément de retenue (200) coopère avec ladite section de montage de galerie (12) afin de fixer ledit élément de jambe (30) à ladite carrosserie (14), et une position de libération, dans laquelle ledit élément de retenue (200) permet un démontage de l'élément de jambe respectif (30) de ladite section de montage de galerie (12),
**caractérisée en ce qu'**une unité de connexion (40) agencée entre l'élément transversal (20) et chaque unité de support (32) est conçue pour permettre le déplacement des éléments de pied (70) les uns par rapport aux autres dans une direction de réglage (38) s'étendant en parallèle à une direction longitudinale d'une barre porteuse (50) de l'élément transversal (20) dans le cours du montage de ladite galerie de toit (12) sur ladite carrosserie (14), **en ce qu'**une unité de verrouillage (100) est fournie, ladite unité de verrouillage (100) permettant une fixation de ladite position relative de l'élément de pied respectif (70) par rapport à ladite barre porteuse (50), **en ce que** ladite unité de verrouillage (100) comprend un élément d'attache (104) qui est relié à ladite unité de retenue (34) et qui verrouille en place une partie respective (52) de ladite barre porteuse (50) dans le cas où ladite unité de retenue (34) est dans sa position de retenue, et libère ladite partie respective (52) dans le cas où ladite partie de retenue (34) est dans sa position libérée, **en ce que** ladite unité de verrouillage (100) verrouille en place ladite partie (52) de ladite barre porteuse (50) en attachant ladite partie (52) entre ledit élément d'attache (104) et une surface de repos (112) de ladite unité de support (32), et **en ce que** dans ladite position de retenue de ladite unité de retenue (34), une force d'attache (FC) agit sur ledit élément de base (80) suivant une direction vers l'élément de pied (70), et **en ce que** ladite force d'attache (FC) est due à une force de retenue (FR) avec laquelle ledit élément de retenue (200) agit sur ladite section de montage de galerie (12).

2. Galerie de toit selon la revendication 1, **caractérisée en ce que** l'unité de connexion (40) est conçue pour permettre un déplacement linéaire de l'unité de support (32) par rapport à ladite barre porteuse (50) parallèle à la direction de réglage (38).

3. Galerie de toit selon la revendication 1 ou 2, **caractérisée en ce que** l'unité de connexion (40) comprend un renfoncement (58) agencé à l'intérieur de ladite barre porteuse (50) dans lequel une section de réception (62) de ladite unité de support (32) est guidée en vue d'un déplacement suivant ladite direction de réglage (38).

4. Galerie de toit selon l'une quelconque des revendications précédentes, **caractérisée en ce que** l'unité de connexion (40) est pourvue d'une unité de limitation de déplacement (130), et **en ce que** ladite unité de limitation de déplacement (130) comprend un premier élément de butée (122) coopérant avec au moins un second élément de butée (126, 128) et **en ce que** l'un desdits premier et second éléments de butée (122, 126, 128) est agencé sur ladite unité de support (32) et un autre desdits premier et second éléments de butée (126, 128, 122) est agencé sur la barre porteuse (50).

5. Galerie de toit selon l'une quelconque des revendications précédentes, **caractérisée en ce que** ladite unité de limitation de déplacement (130) comprend deux seconds éléments de butée (126, 128) agencés à une distance l'un de l'autre dans ladite direction de réglage (38) et le premier élément de butée (122) est agencé entre lesdits deux seconds éléments de butée (126, 128) ayant son déplacement dans ladite direction de réglage (38) limité par lesdits deux seconds éléments de butée (126, 128).

6. Galerie de toit selon l'une quelconque des revendications précédentes, dans laquelle ladite unité de verrouillage (100) permet le verrouillage d'une partie (52) de ladite barre porteuse (50) dans l'une quelconque de ses positions par rapport à l'unité de support (32) reliée à celle-ci.

7. Galerie de toit selon l'une quelconque des revendications précédentes, dans laquelle ladite unité de verrouillage (100) permet le verrouillage forcé d'une partie (52) de ladite barre porteuse (50) par rapport à ladite unité de support (32).

8. Galerie de toit selon l'une quelconque des revendications précédentes, **caractérisée en ce que** ladite unité de retenue (34) comprend un élément de base (80) avec lequel ladite unité de retenue (34) repose sur ladite unité de support (32) et est guidée par rapport à ladite unité de support (32) et **en ce que** ledit élément d'attache (104) est adapté pour fournir un support dudit élément de base (80) de ladite unité de retenue (34) contre un déplacement par rapport à ladite unité de support (32) vers l'élément de pied respectif (70).

9. Galerie de toit selon l'une quelconque des revendications précédentes, dans laquelle ledit système de contrainte (172) comprend un système à genouillère (172).

10. Galerie de toit selon la revendication 9, **caractérisée en ce que** ledit système à genouillère (172) comprend un levier de support (174) et un levier pousseur (184) et **en ce que** ledit levier de support (174) et ledit levier pousseur (184) sont dans une position dépliée et étendue dans ladite position de retenue dudit système de contrainte (172).

11. Galerie de toit selon la revendication 9 ou 10, **caractérisée en ce que** ledit levier de support (174) et ledit levier pousseur (184) sont dans une position en biais dans ladite position de libération dudit système de contrainte (172).

12. Galerie de toit selon l'une quelconque des revendications 9 à 11, **caractérisée en ce que** le levier pousseur (184) est pourvu d'un bras d'actionnement (196) ayant une section de manipulation (198).
